# EUROPEAN PATENT APPLICATION

(11) **EP 4 749 475 A1**
(43) Date of publication of application: **27.05.2026**
(21) Application number: 25785417.4
(22) Date of filing: 23.01.2025
(51) Int. Cl.: G06F 16/25

(54) **DATA READING METHOD, CLIENT, SERVER AND STORAGE SYSTEM**

(30) Priority: 11.04.2024 CN 202410437143
(71) Applicant: Huawei Technologies Co., Ltd., Shenzhen, Guangdong 518129 (CN)
(72) Inventor: REN, Ran, Shenzhen, Guangdong 518129 (CN)
(74) Representative: Pfenning, Meinig & Partner mbB
(86) International application number: PCT/CN2025/074450
(87) International publication number: WO 2025/213935

(57) **Abstract**

A data reading method, a client, a server, and a storage system are provided. The data reading method is applied to a client, and the method includes: receiving a first operation; cyclically performing the following steps S1 to S3 based on the first operation: S1: determine an idle connection from N KV database connections; S2: send a data reading request to a server through the idle connection, where the data reading request includes a first command, a data identifier of target data, a first reading cursor, and a reading step, and the first command indicates the server to read, from a KV database based on the data identifier, the first reading cursor, and the reading step, a data segment corresponding to the data identifier; and S3: receive a reading result returned by the server, where the reading result includes a data segment corresponding to the target data, a second reading cursor of the target data in a next cycle, and indication information indicating whether reading of all the target data is completed; and when a first preset condition is satisfied, stopping the cycle, and concatenating all read data segments in a reading sequence, to obtain the target data, where a reading step in a k^{th} cycle is determined by the client based on a reading result received in a (k-1)^{th} cycle, and in the k^{th} cycle, the first reading cursor is updated to the second reading cursor, where k≥2.

## Description

This application claims priority to Chinese Patent Application No. 202410437143.2, filed with the China National Intellectual Property Administration on April 11, 2024 and entitled "DATA READING METHOD, CLIENT, SERVER, AND STORAGE SYSTEM", which is incorporated herein by reference in its entirety.

### TECHNICAL FIELD

This application relates to the field of database technologies, and in particular, to a data reading method, a client, a server, and a storage system.

### BACKGROUND

Redis is a widely used Key-Value database (a KV database for short), uses a key-value pair as a storage object, and supports storing Value values of a plurality of data types. In the Redis, each key Key corresponds to a unique Value value, and a client may obtain a corresponding Value value based on a Key. This is commonly used in use scenarios such as caching.

A character string (string) is a common data type. When being stored in the KV database, the character string may not only be directly stored as a Value value, but also be stored as a minimum element unit of the Value value when the Value value is a set. However, when data is read from the KV database, because values of some character strings are large, the KV database or the client is vulnerable to blocking in a reading process, and consequently request processing efficiency of the KV database and/or the client is reduced.

### SUMMARY

This application provides a data reading method, a client, a server, and a storage system, so that a problem of low request processing efficiency of a KV database and/or a client in a conventional technology is resolved.

To achieve the foregoing objective, this application uses the following technical solutions.

According to a first aspect, a data reading method is provided, and is applied to a client. The client reads data from a KV database through N KV database connections established between the client and a server, N≥1, and the method includes: receiving a first operation, where the first operation indicates the client to read target data from the KV database; cyclically performing the following steps S1 to S3 based on the first operation: S1: determine an idle connection from the N KV database connections; S2: send a data reading message to the server through the idle connection, where the data reading message includes a first command, a data identifier of the target data, a first reading cursor, and a reading step, and the first command indicates the server to read, from the KV database based on the data identifier, the reading cursor, and the reading step, a data segment corresponding to the data identifier; and S3: receive a reading result returned by the server, where the reading result includes a data segment corresponding to the target data, a second reading cursor of the target data in a next cycle, and indication information indicating whether reading of all the target data is completed; and when a first preset condition is satisfied, stopping the cycle, and concatenating all read data segments in a reading sequence, to obtain the target data, where in all cycles, data identifiers of the target data are the same, and a reading step in a k^{th} cycle is determined by the client based on a reading result received in a (k-1)^{th} cycle, and in the k^{th} cycle, the first reading cursor is updated to the second reading cursor, where k≥2.

Optionally, the reading step in the data reading message may be 0, or the data reading message does not include the reading step. When the data reading message does not include the reading step or the reading step in the data reading message is 0, the server executes the first command based on the data reading message, to obtain, by using a preset reading step, the data segment corresponding to the data identifier, where the preset reading step may be a first threshold, for example, 250 KB.

In the method provided in this embodiment, the client can obtain the target data in a manner of cyclically reading the received data segment. That is, in all the cycles, after obtaining the idle connection, the client reads only data of a specific reading step; and after determining that reading of the target data is completed, the client concatenates read data segments to obtain the target data. This can resolve, in this manner, a problem that the KV database connection is occupied for long time because an amount of data read at a single time is large, and consequently another request cannot obtain the idle connection, reducing execution efficiency of the client and a thread of the KV database, and affecting normal reading of other data.

In some embodiments, the reading result further includes a second version number, of the target data, that is recorded in the KV database.

In some embodiments, the data reading request includes a first version number, and the method further includes: in the k^{th} cycle, before sending the data reading request to the server through the idle connection, updating the first version number to the second version number.

In some embodiments, the method further includes: determining a third version number, where the third version number is the second version number, of the target data, that is recorded in the KV database and that is included in the reading result in the (k-1)^{th} cycle.

In this embodiment, when returning the reading result to the client, the server returns, to the client, the second version number, of the target data, that is recorded in the KV database while returning the data segment corresponding to the target data, the second reading cursor of the target data in the next cycle, and the indication information indicating whether reading of the target data is completed, so that the client updates the first version number to the second version number before sending the data reading message to the server through the idle connection in the k^{th} cycle, or after the k^{th} cycle ends; and determines the third version number. In this manner, the client can determine, based on whether version numbers included in two consecutive received reading results are consistent, whether the target data is modified. In addition, when determining that the version number in the received data reading message is inconsistent with a version number recorded in the KV database, the server can also determine whether the target data is modified.

In some embodiments, the first preset condition includes: the second version number is consistent with the third version number, that the second version number is consistent with the third version number indicates that the target data does not change, first indication information sent by the server is received, and the first indication information indicates that all the target data has been read.

In this embodiment, when the client determines that the second version number is consistent with the third version number, it indicates that the target data does not change in the data reading process. In addition, when the client receives the first indication information sent by the server, it indicates that all the target data has been read. In this case, the client stops the cycle, and concatenates all the read data segments in the reading sequence, to obtain the target data.

In some embodiments, the method further includes: when a second preset condition is satisfied, stopping the cycle, and deleting all the read data segments.

In some embodiments, the second preset condition includes: the second version number is inconsistent with the third version number, and that the second version number is inconsistent with the third version number indicates that the target data has changed; or error information sent by the server is received, the error information is generated by the server in the k^{th} cycle when the server determines that a version number in the received data reading message is inconsistent with a version number recorded in the KV database, and the error information indicates that the target data has changed.

When the client determines that the second version number is inconsistent with the third version number, or the client receives the error information sent by the server, it indicates that the target data in the KV database has changed. In this case, the client stops the cycle, and deletes all the read data segments, to avoid a problem of dirty reading or missing reading.

In some embodiments, a process of determining the reading step in the k^{th} cycle includes: determining based on response duration of the reading result received in the (k-1)^{th} cycle; and determining based on a quantity of times the reading result is received.

In this embodiment, the client determines the reading step in the k^{th} cycle based on the reading result received in the (k-1)^{th} cycle, so that a reading step in each cycle can be adjusted in a process of reading the target data, to adapt to an actual reading process, thereby improving data reading efficiency.

In some embodiments, the reading step is less than or equal to the first threshold.

In this embodiment, when determining the reading step in the k^{th} cycle, the client controls each reading step to be less than or equal to the first threshold, to avoid a problem that the KV database is blocked because a value set for the reading step is excessively large.

It should be noted that after obtaining the idle connection, a reading step of the target data in a first data reading message sent by the client to the server through the idle connection may be a preset step, that is, when k=1, the reading step is the preset step.

According to a second aspect, a data reading method is provided, and is applied to a server on which a KV database is deployed. The method is applied to the server to read data from the KV database by executing a database operation command. The method includes: receiving a data reading message sent by a client, where the data reading message includes a first command, a data identifier of target data, a reading cursor, and a reading step, and the first command indicates the server to read, from the KV database based on the data identifier, the reading cursor, and the reading step, a data segment corresponding to the data identifier; executing the first command based on the data reading message to obtain the data segment corresponding to the data identifier; and when a third preset condition is satisfied, sending a reading result to the client, where the reading result includes a data segment corresponding to the target data.

In this embodiment, after receiving the data reading message, the server executes the first command in the data reading message, to read, from the KV database by using the data identifier, the reading cursor, and the reading step, the data segment corresponding to the data identifier; and when the third preset condition is satisfied, returns, to the client, the reading result including the data segment of the target data.

The reading result further includes a second reading cursor of the target data in a next cycle executed by the client and indication information indicating whether reading of all the target data is completed.

In some embodiments, the data reading message further includes a version number of the target data.

The version number may be 0 or not 0.

In some embodiments, the third preset condition includes: the version number is 0; or the version number is not 0, and the version number is consistent with a version number, of the target data, that is recorded in the KV database.

In this embodiment, when the version number in the data reading message is 0, the server does not need to check the version number, determines that the third preset condition is satisfied, and sends the reading result to the client; or when the version number in the data reading message is not 0, the server needs to check the version number.

In some embodiments, the method further includes: when the third preset condition is not satisfied, generating error information, where the error information indicates that the target data has changed; and sending the error information to the client.

In this embodiment, when the version number in the data reading message is not 0, and the version number in the data reading message is inconsistent with the version number, of the target data, that is recorded in the KV database, it indicates that the target data has changed, it is determined that the third preset condition is not satisfied, and the error information is generated and sent to the client, to indicate the client to stop a process of reading the target data, thereby avoiding a problem of dirty reading or missing reading by the client.

In some embodiments, executing the first command based on the data reading message to obtain the data segment corresponding to the data identifier includes: when the reading step is 0, executing the first command based on the data reading message, to obtain, by using a preset reading step, the data segment corresponding to the data identifier; or when the reading step is not 0, executing the first command based on the data reading message, to obtain, by using the reading step, the data segment corresponding to the data identifier.

Optionally, if the data reading message does not include the reading step, the server executes the first command based on the data reading message, and obtains, by using the preset reading step, the data segment corresponding to the data identifier.

According to a third aspect, a client is provided. The client reads data from a KV database through N KV database connections established between the client and a server, N≥1, and the client includes: a receiving module, configured to receive a first operation, where the first operation indicates the client to read target data from the KV database; an operation module, configured to cyclically perform the following steps S1 to S3 based on the first operation: S1: determine an idle connection from the N KV database connections; S2: send a data reading message to the server through the idle connection, where the data reading message includes a first command, a data identifier of the target data, a first reading cursor, and a reading step, and the first command indicates the server to read, from the KV database based on the data identifier, the first reading cursor, and the reading step, a data segment corresponding to the data identifier; and S3: receive a reading result returned by the server, where the reading result includes a data segment corresponding to the target data, a second reading cursor of the target data in a next cycle, and indication information indicating whether reading of all the target data is completed; and a processing module, configured to: when a first preset condition is satisfied, stop the cycle, and concatenate all read data segments in a reading sequence, to obtain the target data, where in all cycles, data identifiers of the target data are the same, and a reading step in a k^{th} cycle is determined by the client based on a reading result received in a (k-1)^{th} cycle, and in the k^{th} cycle, the first reading cursor is updated to a second reading cursor, where k≥2.

According to a fourth aspect, a server is provided. A KV database is deployed on the server, and the server includes: a receiving module, configured to receive a data reading message sent by a client, where the data reading message includes a first command, a data identifier of target data, a reading cursor, and a reading step, and the first command indicates the server to read, from the KV database based on the data identifier, the reading cursor, and the reading step, a data segment corresponding to the data identifier; an execution module, configured to execute the first command based on the data reading message to obtain the data segment corresponding to the data identifier; and a sending module, configured to send a reading result to the client.

According to a fifth aspect, a storage system is provided. The storage system includes the client according to the third aspect and the server according to the fourth aspect.

It may be understood that for beneficial effect of the third aspect to the fifth aspect, refer to the related descriptions in the first aspect and the second aspect. Details are not described herein again.

### BRIEF DESCRIPTION OF DRAWINGS

FIG. 1 is a diagram of a structure of a storage system according to an embodiment of this application;
FIG. 2A is a schematic flowchart of reading data from a KV database by different service threads in a same client according to an embodiment of this application;
FIG. 2B is a schematic flowchart of reading data from a KV database by different clients according to an embodiment of this application;
FIG. 3A is a diagram of writing data into a database by a client according to an embodiment of this application;
FIG. 3B is a diagram of reading data from a database by a client according to an embodiment of this application;
FIG. 4 is a diagram of comparison between amounts of data written for different Key values in a KV database according to an embodiment of this application;
FIG. 5A is a schematic flowchart of writing data into a database by a client according to another embodiment of this application;
FIG. 5B is a schematic flowchart of reading data from a database by a client according to another embodiment of this application;
FIG. 6 is a schematic interaction flowchart of a data reading method according to an embodiment of this application;
FIG. 7 is a schematic flowchart of cyclically reading, by a client, a character string S in a KV database with a reading step n by using an SDK according to an embodiment of this application;
FIG. 8A to FIG. 8C are a schematic interaction flowchart of a data reading method according to an embodiment of this application;
FIG. 9A to FIG. 9D are a schematic interaction flowchart of a data reading method according to another embodiment of this application;
FIG. 10 is a diagram of a structure of a client according to an embodiment of this application;
FIG. 11 is a diagram of a structure of a server according to an embodiment of this application; and
FIG. 12 is a diagram of a structure of a chip according to an embodiment of this application.

### DESCRIPTION OF EMBODIMENTS

The following describes technical solutions provided in embodiments of this application with reference to the accompanying drawings.

It should be understood that in descriptions of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists.

Terms "first" and "second" in embodiments are merely intended for a purpose of description, and shall not be understood as an indication or an implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

Embodiments of this application provide a data reading method. The method is applied to a storage system including a client and a server. A database is deployed on the server, and the client writes/reads data in the database through a database connection established between the client and the server.

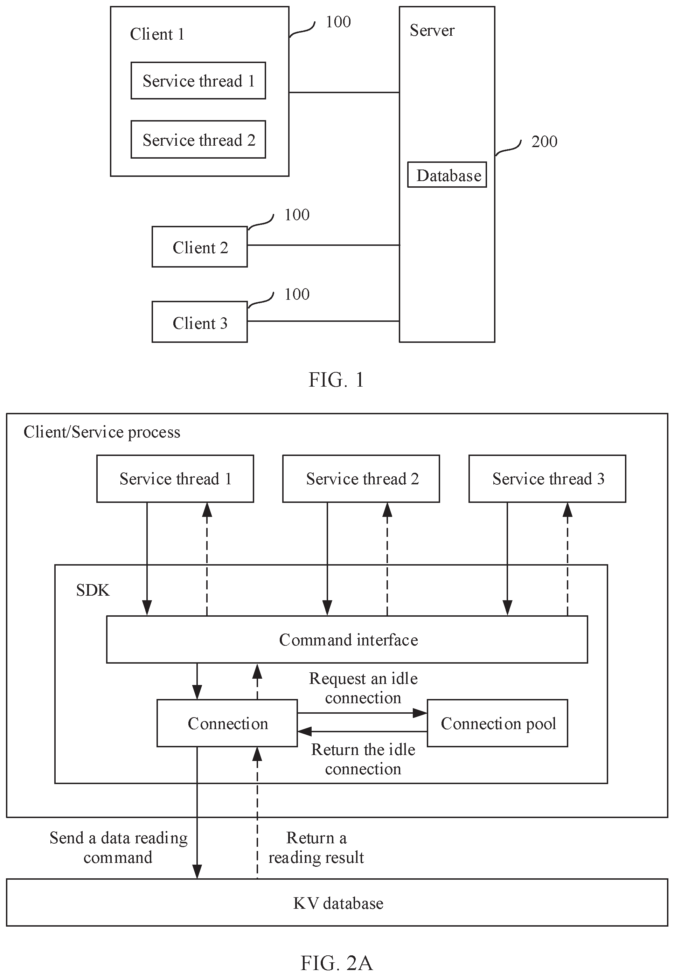

FIG. 1 is a diagram of a structure of a storage system according to an embodiment of this application. As shown in FIG. 1, the storage system includes a client 100 and a server 200. There may be one or more clients 100 and servers 200. It should be understood that quantities of clients 100 and servers 200 shown in FIG. 1 are merely used as examples, and do not constitute a specific limitation.

The client (Client) 100 is configured to provide an interaction interface for a user or directly receive a data request. The user may input an instruction through the client, and the client translates the instruction into a reading/writing request of the user, and reads/writes corresponding data in a database. A specific form of the client may be a web browser, or may be an application that is locally run. This is not specifically limited in this application.

The server (Server) 200 is configured to run various applications, for example, a database, a website, and a game. Main functions of the server are processing a request, storing data, providing a computing service, and the like. The database is deployed on the server, and is a warehouse that organizes, stores, and manages data based on a data structure. The user may perform operations, for example, addition, interception, update, and deletion, on the data in the warehouse through the client. Usually, a type of the database includes a non-relational database (NoSQL), for example, a KV database. The KV database is a simple and efficient data storage structure, divides data into two parts: a key (Key) and a value (Value), and quickly locates and finds a corresponding value based on a key. The KV database includes a memory-based KV database, for example, Redis or RAMCloud; a disk-based database, for example, Memcached or HBase; and a distributed KV database, for example, Cassandra or Amazon Dynamo. During actual application, the client, the server, and the database are usually used together, to construct a complex application. For example, the client may launch an application based on a software development kit (software development kit, SDK), the server may process a request of the application, and the database may store data of the application, so that the application is run on the client, and data storage and management are implemented through the server and the database.

In some embodiments, a plurality of clients 100 may all access the database of the server 200, to read, update, delete, and the like the data in the database. Specifically, the plurality of clients 100 may separately access the database of the server 200 in different time periods, or the plurality of clients may simultaneously access the database of the server 200 in a same time period.

**In** some other embodiments, when processing a data reading request, a plurality of service threads in a specific service process in one client 100 or a plurality of service threads in a plurality of service processes may also access the database of the server 200. Similarly, the plurality of service threads may separately access the database of the server 200 in different time periods, or may simultaneously access the database of the server 200 in a same time period.

It should be noted that in this embodiment, the client 100 may be deployed on the server 200, or may be deployed on an independent server or an electronic device. The independent server may not be the server 200 but another server. In other words, the client 100 and the server 200 may be integrated into one electronic device, or may be integrated into different electronic devices respectively. This is not specifically limited in this application.

The following uses an example in which the database deployed on the server includes the KV database to describe a process in which the client writes/reads the data in the database of the server by using the SDK. For ease of description, writing/reading data in the KV database of the server is writing/reading data in the KV database for short below. For example, reading the data in the KV database of the server by the client is reading the data in the KV database by the client for short.

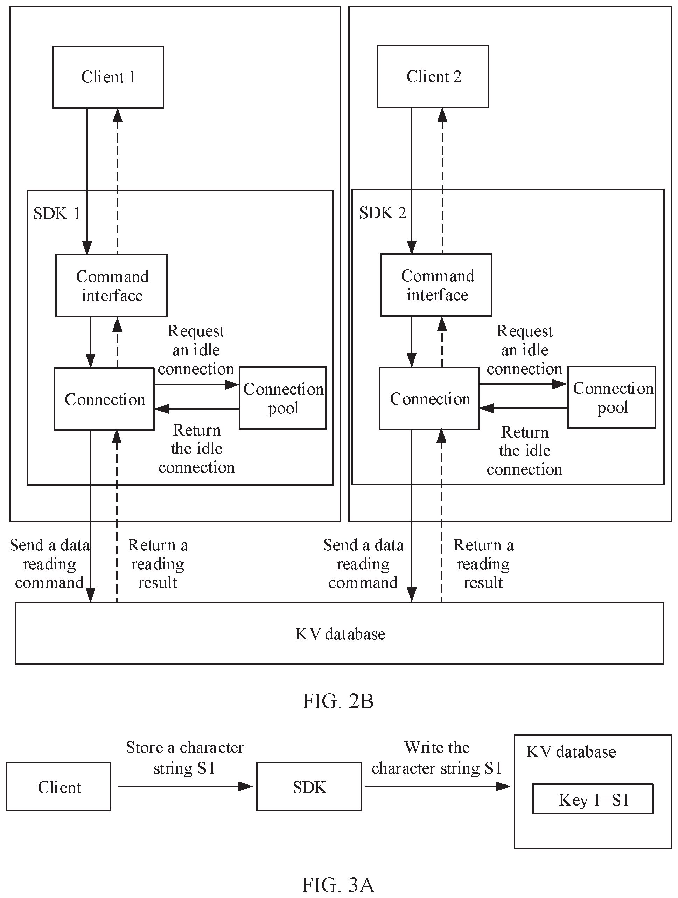

**In** this embodiment, the SDK is a software development kit integrated into the client, and is configured to be connected to the KV database as a proxy of a service thread, to execute a related request command. The KV database is a single node or a cluster formed by a plurality of nodes, and each node provides a database that has a capability of storing and reading a key-value (Key-Value) pair. The client initializes the SDK by using a configuration item such as an IP of a KV database node, and invokes an SDK command interface to read the data. The SDK is connected to the KV database node based on the IP, reads the data from the KV database, and returns the data. The SDK uses a connection pool to manage a node connection. Each time when sending a request, the SDK needs to obtain an idle connection from the connection pool for sending the request. For an overall process, refer to FIG. 2A and FIG. 2B.

It should be understood that a data type of a Value value written into the KV database may be a character string (string), a linked list (list), a set (set), an ordered set (zset), or the like. The character string is used as an example. In the KV database, for one Key value, there is one correspondingly stored character string.

**In** some embodiments, during character string writing, the client invokes a corresponding SDK command interface to write the character string into a key value corresponding to the KV database. During character string reading, after requesting an idle connection from a database connection in the connection pool, the SDK sends a reading command to the KV database based on the requested idle connection. The KV database reads, at a time based on a corresponding key value in the reading command, all character strings stored under the key value, and returns the character strings to the client by using the SDK.

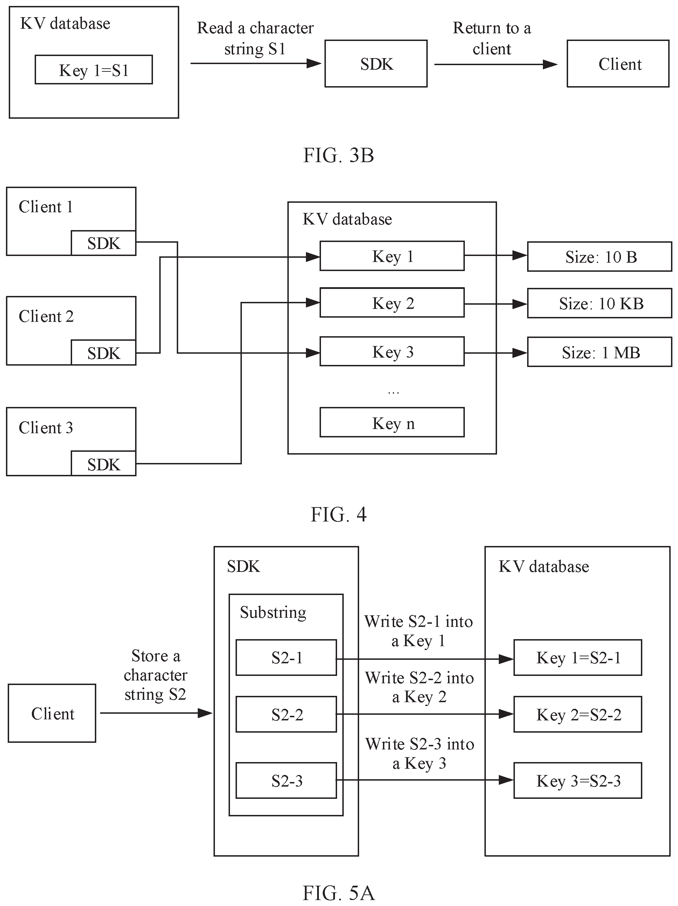

For example, for a data writing scenario, refer to FIG. 3A. If a character string that needs to be written by the client is S1, during character string writing, the client directly invokes the SDK command interface to write the character string S1 into a key value Key 1 corresponding to the KV database, that is, Key 1=S1. For a data reading scenario, refer to FIG. 2B. When the client reads a character string S1, after the SDK requests an idle connection, the SDK sends a reading command to the KV database based on the idle connection, where the reading command includes an identifier that can uniquely determine the character string, for example, a key value Key 1. The KV database returns, to the SDK based on the corresponding key value Key 1, the character string S1 corresponding to the Key 1, and the SDK returns the character string S1 to the client.

In this embodiment, when the client writes the character string into the KV database by using the SDK, the client and the corresponding SDK do not perform any processing on the character string, but directly invoke the SDK command interface to perform the data writing process. During data reading, the SDK reads all character strings written into the Key from the KV database at a time based on the received reading command and the identifier in the reading command.

In the method provided in this embodiment, when the character string written by the client into the Key by using the SDK is large, as shown in FIG. 4, Value values written in a Key 1 and a Key 2 in the KV database are small, and a Value value written in a Key 3 is large. Therefore, when a plurality of service clients access a same KV database in a same time period, the plurality of service clients affect each other. If a size of data accessed by a specific client is large, the KV database is blocked, request processing efficiency of the KV database is reduced, and request processing of another client is affected.

In addition, because a quantity of database connections between the KV database and the client is limited, in a data reading process, a large amount of time may be occupied in a specific database connection because a data amount requested by a specific application or a specific data reading request between a specific service thread and the database in the client is large. As a result, a quantity of database connections that can be shared by another application or another service thread in the client and the database in a same time period is reduced. For example, if there are a total of 10 database connections in the connection pool for 20 service threads in the client to read data, a data request 1 used by a service thread 1 to read the data from the database occupies one of the database connections for up to 10 minutes, and within the 10 minutes, the other 19 service threads can request an idle connection only from the remaining nine database connections. It may be learned that in this manner, a plurality of requests in the client affect each other. If a specific request accesses a large amount of data, it takes long time, and a database connection is occupied for long time. As a result, another request cannot obtain an idle connection.

In some other embodiments, during character string writing, the SDK splits, based on a size threshold of the character string, the character string that needs to be written by the client into a plurality of substrings, and stores the plurality of substrings in a plurality of Keys; and during character string reading, after obtaining an idle connection from the connection pool, the SDK reads the substrings stored in the plurality of Keys, and concatenates the substrings in a reading sequence and returns the substrings to the client.

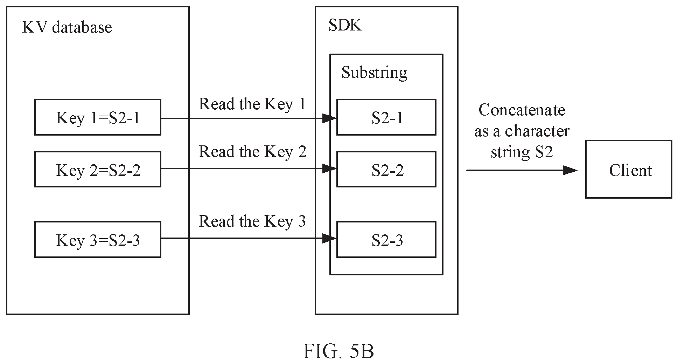

For example, in a data writing scenario, as shown in FIG. 5A, if a character string that needs to be written by the client is S2, during character string writing, the SDK splits the character string S2 into a plurality of substrings based on a size threshold of the character string S2, where for example, S2 is split into S2-1, S2-2, and S2-3; and then stores the substrings in a plurality of Keys, for example, Key 1=S2-1, Key 2=S2-2, and Key 3=S2-3. In this case, when storing the plurality of substrings corresponding to the character string S2, the KV database simultaneously stores a storage sequence of the plurality of substrings in the Keys. For a data reading scenario, as shown in FIG. 5B, when the client reads a character string S1, after the SDK requests to obtain an idle connection, the SDK sends a reading command to the KV database based on the idle connection, to separately read substrings S2-1, S2-2, and S2-3 that are respectively stored in a Key 1, a Key 2, and a Key 3, and a storage sequence, and then concatenates the substrings of the Key 1, the Key 2, and the Key 3 into a character string S2 in a reading sequence, and returns the character string S2 to the client.

In this embodiment, in a manner in which the client splits the character string by using the SDK to write the character string into the KV database, additional storage space (basic storage space to which the data structure belongs) is required to store the substrings and a storage sequence of the entire character string. Consequently, storage space required by data after splitting is increased, and costs are increased. In addition, in a data reading process, a plurality of clients all can access the database. In this case, if another client updates or deletes a specific piece of data when a specific client reads the piece of data, data read by the current client is unreliable, and consequently problems of dirty reading (for example, some substrings are from updated data, and some substrings are from data before update) or missing reading (for example, some substrings are lost) occur.

Based on the foregoing problem, embodiments of this application provide a data reading method. In the method, target data is obtained in a manner of cyclically reading a received data segment. That is, in all cycles, after obtaining an idle connection, a client reads only data of a specific reading step; and after determining that reading of the target data is completed, the client concatenates read data segments to obtain the target data. This resolves a problem that a KV database connection is occupied for long time because an amount of data read at a single time is large, and consequently another request cannot obtain the idle connection, reducing execution efficiency of the client and a thread of a KV database, and affecting normal reading of other data.

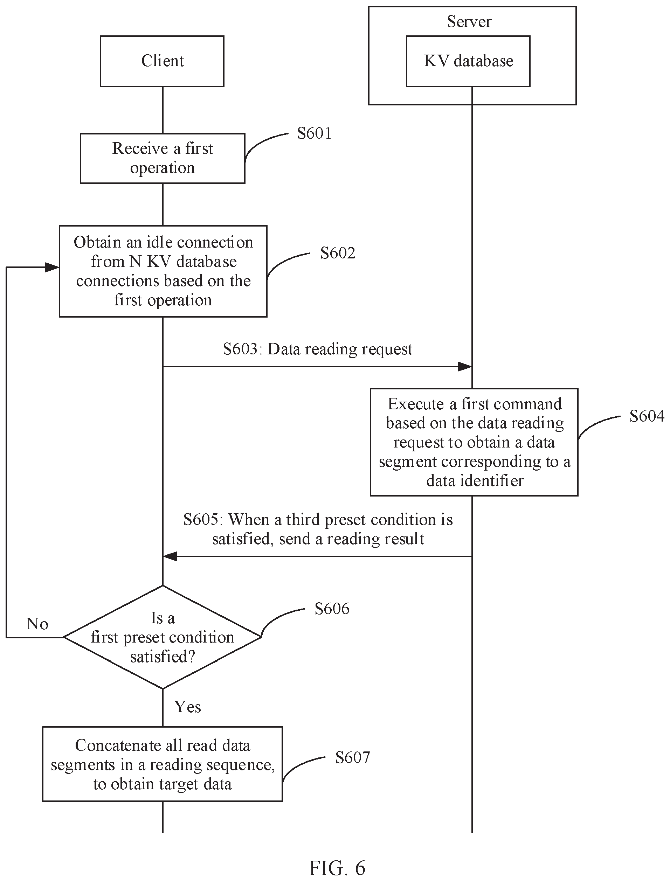

FIG. 6 is a schematic interaction flowchart of a data reading method according to an embodiment of this application. The method is applied to a storage system including a client and a server. The client reads data from a KV database through N KV database connections established between the client and the server, and N≥1. As shown in FIG. 6, the method includes the following steps S601 to S607.

S601: The client receives a first operation, where the first operation indicates the client to read target data from the KV database.

The first operation may be that a user taps an operation interface of the client, or inputs an operation instruction through the client, to indicate the client to cyclically send a reading command to read the target data from the KV database. For example, the client receives a tapping operation performed by the user on a first application. The tapping operation indicates the client to perform a login procedure of the first application. For example, after inputting user information on a login interface of the first application, the user taps a "login" control to log in to the first application. In this case, the client needs to request, from the KV database, to read target data related to the user information input by the user.

S602: The client obtains an idle connection from the N KV database connections based on the first operation.

In this embodiment, the client can read the data from the KV database through any one of the N KV database connections. The N KV database connections are used by any service thread that requires them in the client. Each time the service thread needs to read the data from the KV database, the service thread first obtains one idle connection from the N KV database connections.

In some embodiments, the KV database connections are centrally managed and allocated by a connection pool. When the client or one thread in the client needs to perform a data operation on the KV database, one idle connection is requested from the N KV database connections in the connection pool. After using the connection, the thread or the client returns the connection to the connection pool, so that the connection is used by another thread or client that needs to use the connection. For example, with reference to FIG. 2A and FIG. 2B, the client sends an idle connection request to the connection pool, and the idle connection request is used to obtain the idle connection from the connection pool. After receiving the idle connection request sent by the client, the connection pool returns the idle connection from the N KV database connections to the client.

S603: The client sends a data reading request to the server through the idle connection, where the data reading request includes a first command, a data identifier of the target data, a first reading cursor, and a reading step.

The first command indicates the server to read, from the KV database based on the data identifier, the first reading cursor, and the reading step, a data segment corresponding to the data identifier. For example, the first command may be a scanStr command.

The data identifier of the target data is identification information that can uniquely determine the target data. After receiving the data identifier, the server can determine the unique target data from the KV database based on the data identifier.

The first reading cursor is a location from which the target data starts to be read based on a current data reading request, is a non-negative integer, and is a parameter used to control a reading location of the target data. For example, an initial value of the first reading cursor may be 0, indicating that reading is performed from a location 0, and a maximum value may be 1844674407370955161. In a subsequent cycle, a second reading cursor carried in a reading result returned by a previous data reading request is used as a reading cursor parameter in a next cycle and sent to the server.

In this embodiment, the reading cursor of the target data may be a start location of the target data, or may be a specific location in the middle of the target data. After receiving the reading cursor, the server can determine, based on the reading cursor, a location at which the target data starts to be read from the KV database.

The reading step is a data length that is greater than zero and that is requested based on the current data reading request, and may also be referred to as a data threshold. Data lengths requested in data reading requests may be the same, where for example, reading steps included in the data reading requests are all 10; or may be different, where for example, a reading step included in a current data reading request is 8, and a reading step included in a next data reading request is 10. After receiving the reading step, the server can determine, based on the reading step and the reading cursor, a location at which the target data ends to be read from the KV database.

For example, the target data stored in the KV database is a character string, the character string includes 1 to M pieces of data, and a length of each piece of data is 1, where M≥1. The data identifier may be a key value Key (when the character string is a Value) in the KV database, or a Key plus another parameter (when the character string is an element of a specific set Value); the reading cursor may be a location of an i^{th} piece of data in the character string, where 0≤i≤M-1; and the reading step may be 10 pieces of data.

In some embodiments, the data reading request further includes a version number, for example, a first version number. In this embodiment, the version number may also be referred to as an identifier number (for example, a value range of the version number may be 0 to 1844674407370955161), and is identification information assigned to stored data in the KV database. When the target data is modified or deleted, the KV database assigns a new version number to the target data. Therefore, whether the target data is modified or deleted may be determined by comparing the version number. For example, in the KV database, the KV database records one version number for each Key or set element. If data recorded in the Key changes, the version number also changes accordingly. The version number may be a timestamp. To be specific, after each time of data update, the KV database may use a current timestamp as a new version number.

It should be understood that when the client sends the data reading request of the target data to the server for the first time, the first reading cursor included in the data reading request may be a start location of the target data, where for example, a location when i=0 indicates that reading starts from a location 0; and the version number is generated on a KV database side. Therefore, the first version number in the data reading request sent for the first time may be an initial version number, for example, may be 0.

In some embodiments, when the client sends the data reading request to the server for the first time through the idle connection, the data reading request includes the first command, the data identifier of the target data, the first reading cursor, and the reading step, but does not include the version number of the target data. In other words, when the client transfers a parameter in the data reading request to the server for the first time, the client does not transfer version number information of the target data. Instead, only when the client identifies a second version number of the target data in a reading result returned by the server after receiving the reading result, the second version number and the data reading request are sent to the server together when the data reading request is sent in a next cycle. It should be noted that in this embodiment, a case in which the version number is 0 is summarized as a case in which the version number is included, and the version number is 0.

S604: The server executes the first command based on the data reading request to obtain the data segment corresponding to the data identifier.

After receiving the data reading request sent by the client, the server logs in to the KV database based on the data reading request, inputs the first command, the data identifier of the target data, the first reading cursor, and the like in an interaction interface input provided by the KV database, and then determines the target data from the KV database based on the data identifier in the data reading request. After determining the target data, the server executes the first command, that is, determines, based on the first reading cursor in the data reading request, the location at which the target data starts to be read, and then determines, based on the reading step, the location at which the target data ends to be read. The server generates the data segment by using data whose data length is within the reading step after the first reading cursor.

Optionally, when the reading step in the data reading request is 0 or the data reading request does not include the reading step, the server executes the first command based on the data reading request, and obtains the data segment corresponding to the data identifier by using a preset reading step. When the reading step in the data reading request is not 0, the server executes the first command based on the data reading request, and obtains the data segment corresponding to the data identifier by using the reading step in the data reading request.

S605: When a third preset condition is satisfied, the server sends a reading result to the client, where the reading result includes a data segment corresponding to the target data.

The reading result further includes a second reading cursor of the target data in a next cycle of the client and indication information indicating whether reading of all the target data is completed.

Optionally, the server may determine, based on the location at which the target data ends to be read, the second reading cursor of the target data in the next cycle and whether all the target data is read.

In some embodiments, the reading result returned by the server further includes the second version number, of the target data, that is recorded in the KV database. In view of this, in a k^{th} cycle, before sending the data reading request to the server through the idle connection, or after a (k-1)^{th} cycle ends, the client updates the first reading cursor to the second reading cursor, and updates the first version number to the second version number, where k≥2.

It may be learned from the above that on a premise that the data reading request sent by the client includes the version number, the version number in the data reading request received by the server may be 0 or may not be 0. When the version number in the data reading request is 0, the version number may be a first version number carried in a first data reading request sent by the client to the server. When the version number in the data reading request is not 0, the version number may be a second version number carried in another data reading request sent by the client to the server, and the version number not being 0 may be carried in the reading result returned by the server to the client and sent by the client to the server again. When the version number in the data reading request received by the server is 0 or the version number information of the target data is not received, the server does not check the version number; otherwise, the server needs to check the version number.

In some embodiments, when the version number in the data reading request is 0 or the version number information of the target data is not received, the server determines that the third preset condition is satisfied. In this case, the server sends the reading result to the client.

In some other embodiments, when the version number in the data reading request is not 0, and the version number in the data reading request is consistent with the version number, of the target data, that is recorded in the KV database, the server determines that the third preset condition is satisfied. In this case, the server sends the reading result to the client. When the version number in the data reading request is not 0, and the version number in the data reading request is inconsistent with the version number, of the target data, that is recorded in the KV database, the server determines that the third preset condition is not satisfied, and generates error information, and the error information indicates that the target data has changed. In this case, the server sends the error information to the client, to indicate that the target data currently read by the client has changed, and stops the current data reading process.

When the third preset condition is satisfied, the server packs the data segment corresponding to the target data, a next reading cursor, and the indication information indicating whether reading of all the target data is completed, to generate the reading result, and returns the reading result to the client.

In some embodiments, the server generates first indication information when reading of the target data is completed, where the first indication information indicates that all the target data has been read; and generates second indication information when reading of the target data is not completed, where the second indication information indicates that reading of the target data is not completed.

In some other embodiments, the server generates the first indication information only when reading of the target data is completed, where the first indication information indicates that all the target data has been read; and does not generate the indication information when reading of the target data is not completed. For example, the first indication information may be combined with the reading cursor or the version number. For example, when the reading cursor is 0 again, it indicates that reading of the target data is completed.

S606: When a first preset condition is not satisfied, the client cyclically performs the foregoing steps S602 to S605, or when the first preset condition is satisfied, performs step S607.

The first preset condition includes receiving the first indication information sent by the server, and the first indication information indicates that all the target data has been read.

As described in the foregoing embodiment, the reading result returned by the server includes the indication information indicating whether reading of all the target data is completed. The indication information may be the first indication information indicating that all the target data has been read, or may be the second indication information indicating that reading of the target data is not completed.

In this step, when the client determines that the reading result does not include the first indication information or the second indication information, or includes the second indication information but does not include the first indication information, it indicates that the first indication information indicating that all the target data has been read is not received, that is, reading of the target data is not completed. In this case, the client obtains the idle connection from the N KV database connections again; and after obtaining the idle connection, sends the data reading request to the server through the obtained idle connection, where the data reading request includes the data identifier of the target data, the second reading cursor, and the reading step. It should be noted that the second reading cursor in the data reading request is the second reading cursor, in the next cycle, included in a reading result returned by the server in a previous cycle. Optionally, the data reading request further includes the second version number of the target data, and the version number is returned to the client together with the reading result into which the second version number, of the target data, that is recorded in the KV database is packed by the server based on a previous data reading request in the previous cycle.

In this step, when the client determines that the reading result includes the first indication information, it indicates that all the target data has been read.

The client continues to request a next data segment by using a next second data reading cursor and a next reading step that are returned in the current data reading request as request parameters of a next data reading request, to implement cyclic invocation, and determines, based on whether the first indication information is received, whether reading of the target data is completed until all data segments are requested.

It should be noted that in this embodiment, when the client executes all cycles, data identifiers of the target data in the data reading request sent to the server are the same, so that when receiving the data reading request, the server reads content in the target data from the KV database each time. In addition, the reading step included in the data reading request sent by the client to the server in the k^{th} cycle is determined by the client based on the reading result received in the (k-1)^{th} cycle. In addition, in the k^{th} cycle, the client updates the first reading cursor to the second reading cursor, and updates the first version number to the second version number, so that in a process of executing the cycle, both the reading cursor and the version number are dynamically updated, thereby ensuring data reading accuracy.

In some embodiments, the client determines the reading step in the k^{th} cycle based on response duration of the reading result received in the (k-1)^{th} cycle. For example, if the response duration of the reading result received in the (k-1)^{th} cycle is long, the reading step in the k^{th} cycle is decreased; or if the response duration of the reading result received in the (k-1)^{th} cycle is short, the reading step in the k^{th} cycle is increased.

In some other embodiments, the client determines the reading step in the k^{th} cycle based on a quantity of times the reading result is received. For example, if the client determines that reading of the target data is not completed in a preset quantity of times, the client increases the reading step in the k^{th} cycle, to reduce a quantity of times the target data is read, and complete a current reading process of the target data as soon as possible, so that the KV database can process a data request of another client.

In this embodiment, when determining the reading step in the k^{th} cycle, the client controls each reading step to be less than or equal to a first threshold, to avoid a problem that the KV database is blocked because a value set for the reading step is excessively large.

S607: When the first preset condition is satisfied, the client stops the cycle, and concatenates all the read data segments in a reading sequence, to obtain the target data.

In this embodiment, when the client and the server do not transfer the version number information to each other in a data reading process, the first preset condition includes: receiving the first indication information sent by the server, where the first indication information indicates that all the target data has been read.

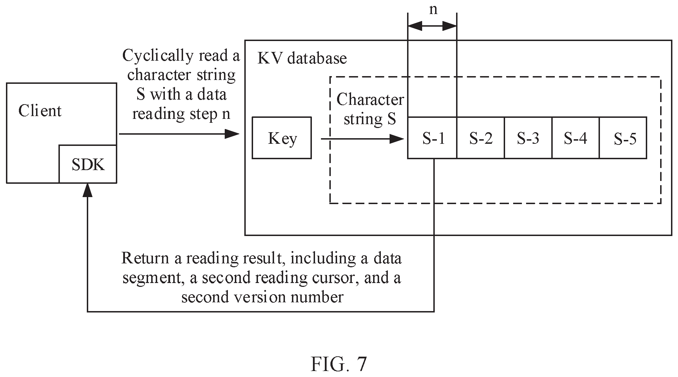

For example, when determining that the reading result includes the first indication information, the client stops performing the cyclic process of steps S602 to S604, and concatenates the read data segments in the reading sequence, to obtain the target data. For example, as shown in FIG. 7, when the client cyclically reads a character string S in the KV database by using an SDK with a reading step n, if the data segment read by the client includes S-1, S-2, S-3, S-4, and S-5, the client concatenates S-1, S-2, S-3, S-4, and S-5 in the reading sequence, to obtain the character string S, namely, the target data.

When the version number information is transferred in the data reading process between the client and the server, the client needs to determine a third version number in the k^{th} cycle, where the third version number is the second version number, of target data, that is recorded in the KV database and that is included in the reading result in the (k-1)^{th} cycle. In this case, the first preset condition includes: the second version number is consistent with the third version number, that the second version number is consistent with the third version number indicates that the target data does not change, the first indication information sent by the server is received, and the first indication information indicates that all the target data has been read. When the second version number is consistent with the third version number, and the client receives the first indication information sent by the server, the client stops performing the cyclic process of the foregoing steps S602 to S605, and concatenates the read data segments in the reading sequence, to obtain the target data.

Optionally, when a second preset condition is satisfied, the client stops the cycle, and deletes all the read data segments. The second preset condition includes: the second version number is inconsistent with the third version number, and that the second version number is inconsistent with the third version number indicates that the target data has changed; or error information sent by the server is received, the error information is generated by the server in the k^{th} cycle when the server determines that a version number in the received data reading request is inconsistent with a version number recorded in the KV database, and the error information indicates that the target data has changed.

In the data reading method in this embodiment of this application, a manner of splitting and cyclic reading is used to obtain the target data. Each time after the client requests an idle connection, the data reading request sent by the client is used to read the target data based on a specific reading step; and after receiving the first indication information that is sent by the server and that indicates that reading of the target data has been completed, all the read data segments are concatenated to obtain the target data. In this manner, each time after obtaining the idle connection, the client can read only a data segment corresponding to a specific threshold.

According to the method provided in this embodiment, when a plurality of clients access a same KV database, it may be ensured that the clients do not affect each other, and the KV database can perform corresponding processing on a data reading request sent by each client, thereby avoiding a problem that the KV database is blocked due to a large amount of data accessed by a specific client, request processing efficiency of the KV database is reduced, and request processing of another client is affected. In addition, mutual impact between data reading requests corresponding to a plurality of service threads in a same client can be reduced, and this does not cause a problem that another request cannot obtain the idle connection due to a large amount of data accessed by a data reading request of a specific service thread, which is time-consuming and occupies long client connection time.

The following further explains and describes the data reading method provided in this embodiment of this application by using two specific examples.

### Example 1

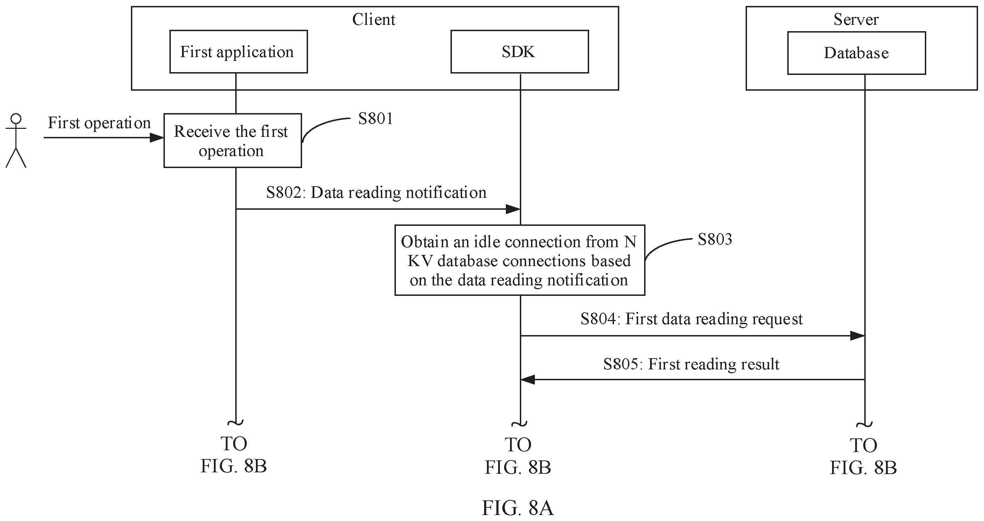

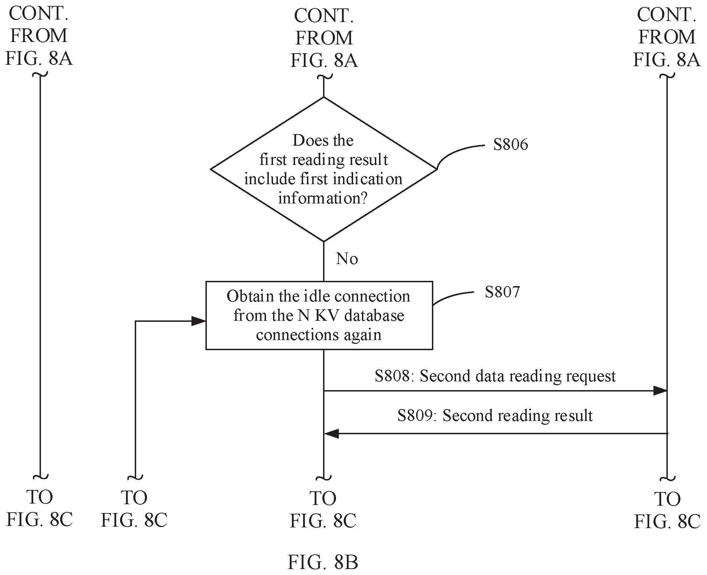

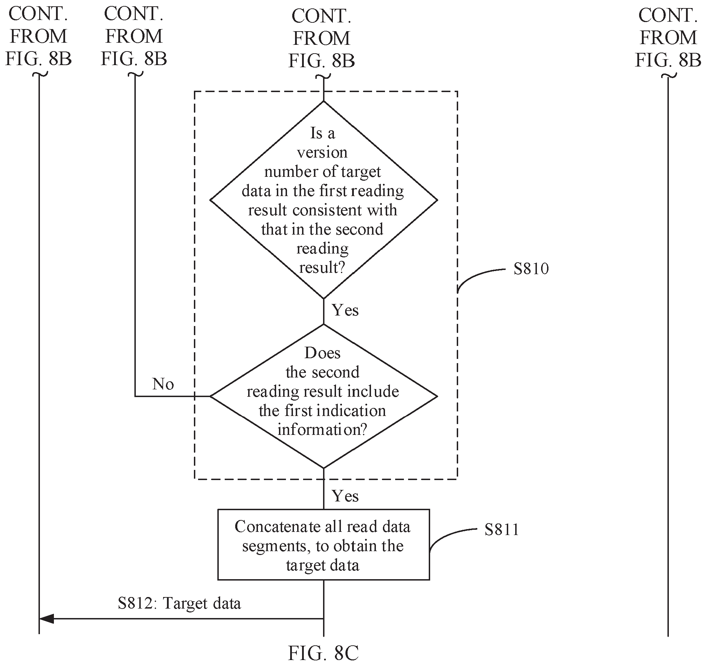

FIG. 8A to FIG. 8C are a schematic interaction flowchart of a data reading method according to an embodiment of this application. The method relates to processing logic in which a first application in a client reads target data in batches by invoking an SDK segmented reading command (that is, cyclically sending a data reading request) until reading of the target data is completed. Specifically, an example in which the first application in the client reads the target data (Key=string, Value=123456789009876543211234567890) and requests a KV database through an SDK segmented interface: scanStr is used. As shown in FIG. 8A to FIG. 8C, the method includes the following steps S801 to S812.

S801: The first application receives a first operation.

For example, the first operation may be a tapping operation on the first application, to indicate the first application to read the target data Value=123456789009876543211234567890 from the KV database.

S802: The first application sends a data reading request to an SDK based on the first operation.

The data reading request is used to request the SDK to read the target data from the KV database in a manner of cyclically sending the data reading request.

S803: The SDK obtains an idle connection from N KV database connections based on the data reading request.

S804: The SDK sends a first data reading request to a server through the idle connection, where the first data reading request includes a data identifier of the target data, a first reading cursor, a reading step, and a first version number of the target data.

In this embodiment, the data identifier Key value key=string of the target data, the first reading cursor cursor=0, the reading step count=10, and the first version number version=0.

S805: The server reads data from the KV database based on the first data reading request, generates a first reading result, and returns the first reading result to the SDK.

The server determines, based on a data identifier Key value string in a first reading command, that the target data is a character string 123456789009876543211234567890 corresponding to the string in the KV database, and determines, based on the first reading cursor cursor=0 and the reading step count=10, that a first data segment S-1=1234567890 that needs to be currently read and a second reading cursor cursor=10 in a next cyclic reading command. It should be noted that in this embodiment, the first version number in the data reading request received by the server is 0, and therefore it is determined that a third preset condition is satisfied. In this case, the server directly sends a reading result to the client, to be specific, the server packs the first data segment S-1=1234567890, the second reading cursor cursor=10 in the next cycle, a second version number version=1704253321324115 corresponding to the character string 123456789009876543211234567890, and the indication information indicating whether reading of all the target data is completed, generates the first reading result, and returns the first reading result to the SDK.

S806: The SDK determines whether the first reading result includes the first indication information; and if the first reading result does not include the first indication information, performs step S806.

The first indication information may be combined with the second reading cursor or the second version number. For example, when the reading cursor is 0 again, it is determined that the first reading result includes the first indication information. In this embodiment, as described in step S805, the second reading cursor cursor=10 in the reading result. Therefore, the SDK determines that the reading result does not include the first indication information.

S807: The SDK determines that the first reading result does not include the first indication information, and obtains the idle connection from the N KV database connections again.

The SDK determines, based on the first reading result, that the first reading result does not include the first indication information, indicating that reading of the target data is not completed. In this case, the SDK obtains the idle connection from the N KV database connections again, to continue to read a next data segment in the target data.

S808: The SDK sends a second data reading request to the server through the idle connection that is obtained again, where the second data reading request includes a data identifier of the target data, a second reading cursor, a reading step, and a second version number of the target data.

In this embodiment, a second reading command includes the data identifier Key value key=string of the target data, the second reading cursor cursor=10, the reading step count=10, and the second version number version=1704253321324115. In other words, in this case, the SDK has updated the first reading cursor in the data reading request to the second reading cursor, the first version number to the second version number, and so on. Similar update is performed in a subsequent cyclic process.

S809: The server reads the data from the KV database based on the second data reading request, generates a second reading result, and returns the second reading result to the SDK.

The server determines, based on a data identifier Key value string in the second reading command, that the target data is a character string 123456789009876543211234567890 corresponding to the string in the KV database, and determines, based on the second reading cursor cursor=10 and the reading step count=10, that a second data segment S-2=0987654321 that needs to be currently read and a reading cursor cursor=20 in a next reading command. Then, the server packs the second data segment S-2=0987654321, a next third reading cursor cursor=20, a third version number version=1704253321324115 corresponding to the character string 123456789009876543211234567890, and the indication information indicating whether reading of all the target data is completed, generates the second reading result, and returns the second reading result to the SDK.

In some embodiments, the server compares the second version number in the second reading command with the third version number, of the target data, that is recorded in the KV database. If the second version number is consistent with the third version number of the target data, it indicates that the target data has changed, for example, is modified or updated. If the second version number is inconsistent with the third version number of the target data, it indicates that the target data does not change. In this case, the server directly returns error information to the SDK, and the error information indicates that the target data has changed. In this embodiment, the server compares the second version number version=1704253321324115 in the second reading command with the third version number version=1704253321324115 recorded in the KV database, and a comparison result indicates that the version numbers are consistent. Therefore, it is determined that the third preset condition is satisfied, and the error information does not need to be returned to the SDK.

S810: When a version number in the first reading result is consistent with a version number in the second reading result, the SDK determines whether the second reading result includes the first indication information; and if the second reading result does not include the first indication information, cyclically performs steps S807 to S809 until the first indication information sent by the server is received; or if the second reading result includes the first indication information, performs step S811.

In this embodiment, the version number in the first reading result is consistent with the version number in the second reading result, that is, the second version number version=1704253321324115 is consistent with the third version number version=1704253321324115, indicating that the character string does not change in a process in which the SDK performs cyclic reading. In this case, the SDK further determines whether the second reading result includes the first indication information. If the second reading result does not include the first indication information, steps S806 to S808 are cyclically performed until the first indication information sent by the database is received, indicating that the cycle is completed, and reading of the target data has been completed. If the second reading result includes the first indication information, step S810 is performed.

In some embodiments, if the SDK receives the error information returned by the server, the SDK determines that the target data has changed, stops performing the data reading process, and reports an error to the first application, to indicate the first application to read the target data again.

S811: The SDK concatenates all read data segments in a reading sequence, to obtain the target data.

Based on that the target data read by the first application by using the SDK in this embodiment is the character string 123456789009876543211234567890, and a reading step read by each data reading request is 10, in a case in which version numbers of the target data in all reading results are consistent, the SDK can obtain three reading results, and data segments in the reading results are respectively: a first data segment S-1=1234567890, a second data segment S-2=0987654321, and a third data segment S-3=1234567890. The SDK concatenates the three data segments in the reading sequence to obtain the character string 123456789009876543211234567890 of the target data.

S812: The SDK returns the target data to the first application.

It should be noted that in this embodiment, when the first application invokes the SDK segmented data reading request to read the target data from the KV database, the data reading request includes a Key, an initial reading cursor, an initial version number, and a reading step (namely, a data amount of a single request); and a reading result returned by the KV database includes a data segment requested in the data reading request, a next reading cursor, and a version number of the target data. For a data reading request in a next cycle of the SDK, the KV database is used to perform the cycle based on the reading cursor and the version number of the target data in the next cycle that are returned by the previous data reading request, until the first indication information is received, indicating that all data is requested. In a process in which the application reads the target data in the KV database by using the SDK, a problem that a service or the KV database is blocked because an amount of data is large and reading occupies long time can be avoided, a latency of requesting the KV database by the application is stabilized, and stable running of the application and the database is ensured.

The data reading method provided in this embodiment of this application may be applied to the data reading process of the character string type. The first application invokes an SDK batch data reading request, sends the batch data reading request to the server, controls a location and a length of each time of reading by using the reading cursor and the reading step, and reads data segments in batches until the reading is completed, and concatenates and returns the data segments. In this process, the first application can read character string data based on a specific threshold, and the read data can be reliable based on version number control, and there is no problem of dirty reading or missing reading. In addition, in a process of cyclically reading the target data by segments, the character string does not need to be split into a plurality of Keys for storage, and the reading sequence and additional storage space required for storing the plurality of Keys are recorded, so that costs can be reduced.

### Example 2

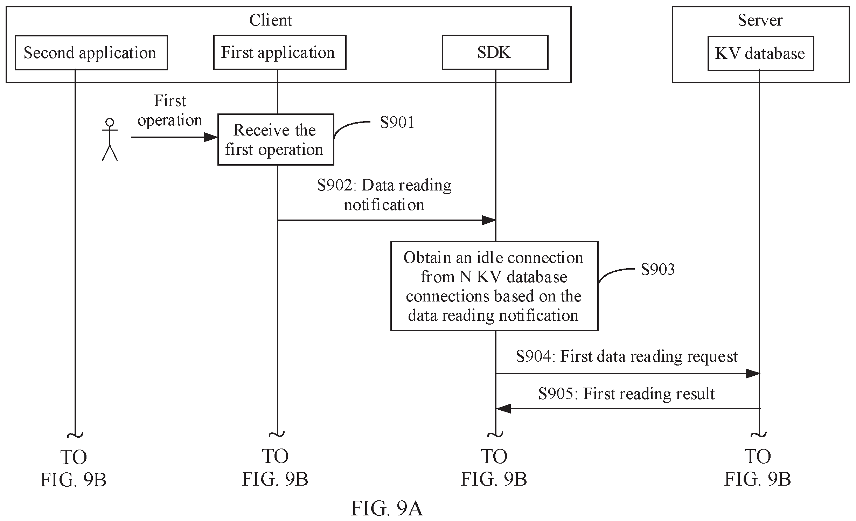

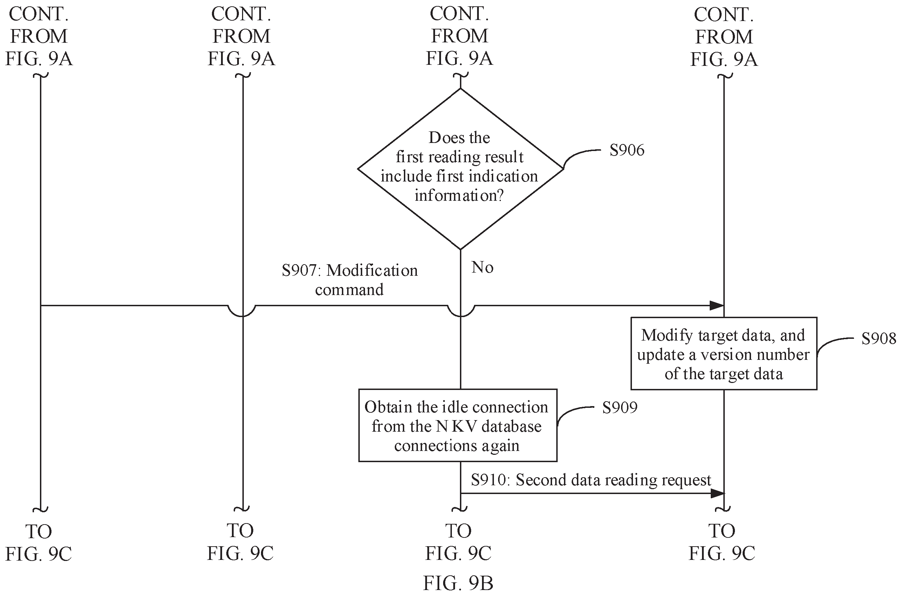

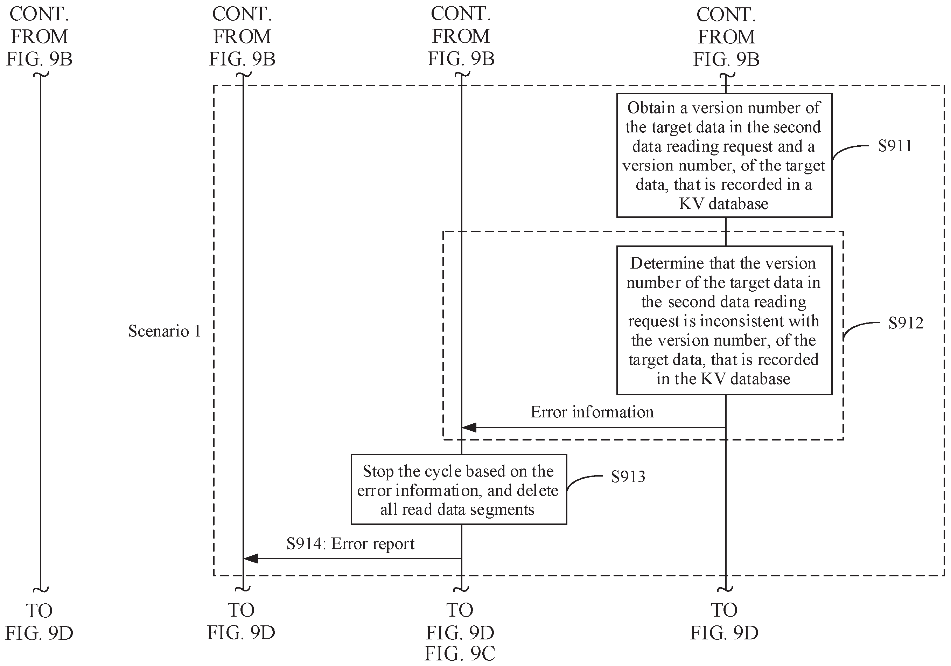

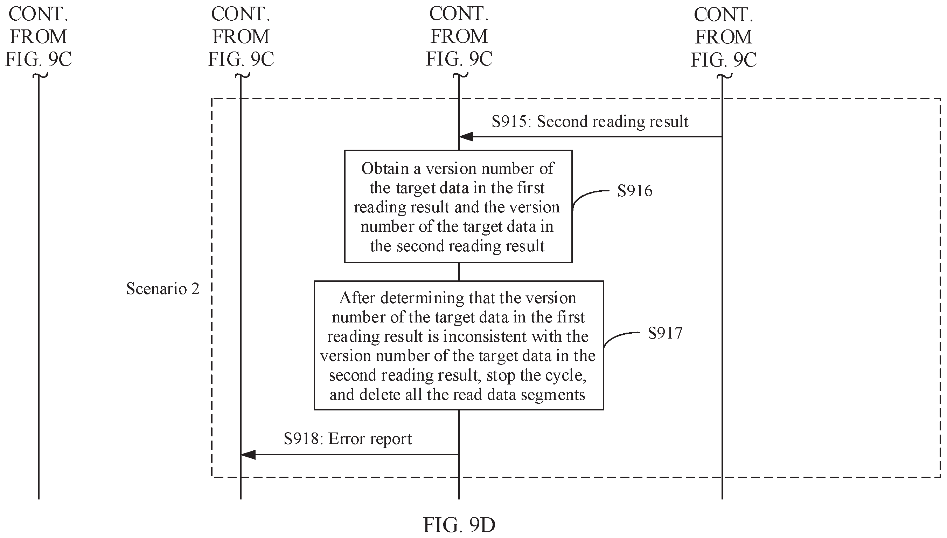

FIG. 9A to FIG. 9D are a schematic interaction flowchart of a data reading method according to an embodiment of this application. The method relates to processing logic in which target data is modified by a second application in a process in which a first application in a client reads the target data in batches by invoking an SDK segmented reading command (that is, cyclically sending a data reading request). Specifically, an example in which the first application in the client reads the target data (Key=string, Value=123456789009876543211234567890) and requests a KV database through an SDK segmented interface: scanStr is used. As shown in FIG. 9A to FIG. 9D, the method includes the following steps S901 to S918.

S901: The first application receives a first operation.

S902: The first application sends a data reading request to an SDK based on the first operation.

S903: The SDK obtains an idle connection from N KV database connections based on the data reading request.

S904: The SDK sends a first data reading request to a server through the idle connection, where the first data reading request includes a data identifier of the target data, a first reading cursor, a reading step, and a first version number of the target data.

S905: The server reads data from the KV database based on the first data reading request, generates a first reading result, and returns the first reading result to the SDK.

The first reading result includes a data segment corresponding to the target data, a second reading cursor of the target data in a next cycle, a second version number, of the target data, that is recorded in the KV database, and indication information indicating whether reading of all the target data is completed.

S906: The SDK determines whether the first reading result includes first indication information; and if the first reading result does not include the first indication information, performs step S909.

S907: The second application sends a modification command to the server, where the modification command indicates the server to modify the target data in the KV database.

The modification command includes the data identifier of the target data, that is, key=string.

S908: The server modifies the target data in the KV database based on the modification command, and updates a version number of the target data after the target data is completely modified.

S909: The SDK obtains the idle connection from the N KV database connections again.

S910: The SDK sends a second data reading request to the server through the idle connection that is obtained again, where the second data reading request includes a data identifier of the target data, a second reading cursor, a reading step, and a second version number of the target data.

S911: The server obtains the second version number of the target data in the second data reading request and a third version number, of the target data, that is recorded in the KV database.

It should be understood that the second data reading request sent by the client to the server carries the updated second version number of the target data, and the third version number generated after the target data is modified is recorded in the KV database.

In other words, based on the foregoing steps S907 and S908, the server has modified the target data in the KV database based on the modification command sent by the second application, and the KV database adaptively and synchronously modifies the version number of the target data. Therefore, after this step, the version number of the target data has changed.

S912: After determining that the second version number of the target data in the second data reading request is inconsistent with the third version number, of the target data, that is recorded in the KV database, the server returns error information to the SDK, where the error information indicates that the target data has changed.

It should be understood that in this example, before receiving the second data reading request, the server has modified the target data in the KV database based on the modification command of the second application, and synchronously updates the version number of the target data. Therefore, the error information in this embodiment is generated when the server determines, after receiving the second data reading request, that the second version number of the target data in the second data reading request is inconsistent with the third version number, of the target data, that is recorded in the KV database, and that the third preset condition is not satisfied, that is, generated in a second cyclic process. When the method is applied to another embodiment, the error information may be generated in a k^{th} cycle when the server determines that a version number in the received data reading request is inconsistent with a version number recorded in a database, where k≥2.

S913: The SDK stops the cycle based on the error information, and delete all read data segments.

The SDK stops performing the current data reading process based on the error information and clears all the read data segments.

S914: The SDK sends an error report to the first application.

The error report indicates that the target data of the first application has changed, and indicate the first application to read the modified target data again.

In this embodiment, for steps S911 to S914, refer to a scenario 1 in FIG. 9A to FIG. 9D. Optionally, as shown in a scenario 2 in FIG. 9A to FIG. 9D, in this embodiment, steps S911 to S914 may alternatively be the following steps.

S915: The server reads the data from the KV database based on the second data reading request, generates a second reading result, and returns the second reading result to the SDK.

S916: The SDK obtains a second version number of the target data in the first reading result and a third version number of the target data in the second reading result.

S917: After determining that the second version number of the target data in the first reading result is inconsistent with the third version number of the target data in the second reading result, the SDK stops the cycle, and deletes all the read data segments.

S918: The SDK sends an error report to the first application.

That the version numbers are inconsistent indicates that the target data has changed.

The data reading method provided in this embodiment relates to a process in which the target data is modified by the second application in a process in which the first application reads the target data by using an SDK batch data reading request. The first application invokes the SDK batch data reading request, and sends the request to the server. The server controls a location and a length of each time of reading by using a data reading cursor and a reading step, determines, by using a version number of each request, whether data is modified, and if the data is modified, returns an error, and notifies the first application that the target data has been modified. By comparing the data version numbers of the target data, a problem of dirty reading or missing reading of the data is avoided. If the target data is modified by a request of another application in the reading process, the SDK notifies the current application of the modification by reporting an error to prevent the current application from reading error data.

It should be noted that the version number recorded in the KV database in this embodiment of this application is a data version number, and is used in a scenario in which new data and old data are compared. For example, in a primary-secondary node data synchronization scenario, Redis data in a common KV database does not have a version number, and primary-secondary data synchronization is completed in a full overwriting manner. To be specific, a primary node sends full data to a secondary node, and the secondary node unconditionally overwrites data of the secondary node. Subsequently, to improve synchronization efficiency, synchronization data is sequentially sent based on an incremental message queue before the incremental message queue is full. If the incremental message queue is full, full data synchronization is triggered, and the secondary node still unconditionally overwrites the data of the secondary node. However, the KV database in this embodiment optimizes a primary-secondary data synchronization scenario based on a version number. The primary node checks the data of the secondary node. If a version number of a specific piece of data of the secondary node is lower than that of the primary node, the primary node actively pushes the data to the secondary node for update. Conversely, the secondary node also checks data of the primary node. If a version number of a specific piece of data of the primary node is higher than that of the secondary node, the secondary node actively pulls the data for update. When receiving the synchronization data, the secondary node also checks the version number of the synchronization data and the version number of the secondary node. The secondary node receives the synchronization data only when the version number is later than the version number of the secondary node. The version number comparison and data check can prevent the primary node from frequently performing full data synchronization, which affects the performance.

There are two types of version numbers of the database MySQL. One is a message version number (binlog sequence number), which is used to a scenario of comparing the old and new messages, but is not related to the data. The other is a modified version number of the data, which is used only in a transaction scenario to determine whether the data can be displayed externally (new written data cannot be displayed externally if the transaction is not completed), and is not related to data synchronization and data old/new determining. The version numbers in Example 1 and Example 2 of this application are used to determine whether the target data is modified, and belong to the second type, namely, the modified version number of the data.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

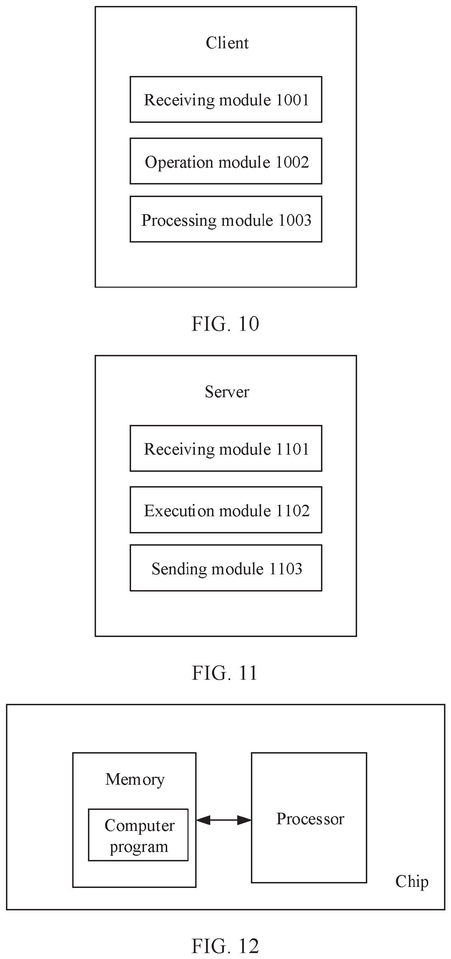

An embodiment of this application further provides a client. The client reads data from a KV database through N KV database connections established between the client and a server, and N≥1. As shown in FIG. 10, the client includes a receiving module 1001, an operation module 1002, and a processing module 1003.

The receiving module 1001 is configured to receive a first operation, where the first operation indicates the client to read target data from the KV database;
an operation module 1002, configured to cyclically perform the following steps S1 to S3 based on the first operation:
   S1: determine an idle connection from the N KV database connections;
   S2: send a data reading request to the server through the idle connection, where the data reading request includes a first command, a data identifier of the target data, a first reading cursor, and a reading step, and the first command indicates the server to read, from the KV database based on the data identifier, the reading cursor, and the reading step, a data segment corresponding to the data identifier; and
   S3: receive a reading result returned by the server, where the reading result includes a data segment corresponding to the target data, a second reading cursor of the target data in a next cycle, and indication information indicating whether reading of all the target data is completed; and
a processing module 1003, configured to: when a first preset condition is satisfied, stop the cycle, and concatenate all read data segments in a reading sequence, to obtain the target data, where
in all cycles, data identifiers of the target data are the same, and a reading step in a k^{th} cycle is determined by the client based on a reading result received in a (k-1)^{th} cycle, and in the k^{th} cycle, the first reading cursor is updated to a second reading cursor, where k≥2.

An embodiment of this application further provides a server. A KV database is deployed on the server. As shown in FIG. 11, the server includes a receiving module 1101, an execution module 1102, and a sending module 1103.

The receiving module 1101 is configured to receive a data reading request sent by a client, where the data reading request includes a first command, a data identifier of the target data, a reading cursor, and a reading step, and the first command indicates the server to read, from the KV database based on the data identifier, the reading cursor, and the reading step, a data segment corresponding to the data identifier;
the execution module 1102 is configured to execute the first command based on the data reading request to obtain the data segment corresponding to the data identifier; and
the sending module 1103 is configured to send a reading result to the client.

An embodiment of this application further provides a chip. As shown in FIG. 12, the chip includes a processor and a memory. The memory stores a computer program. When the computer program is executed by the processor, the data reading method in the foregoing embodiments is implemented.

An embodiment of this application further provides a computer-readable storage medium. The computer-readable storage medium stores a computer program. When the computer program is executed by a processor, the data reading method provided in the foregoing embodiments is implemented.

An embodiment of this application further provides a computer program product. The program product includes a computer program. When the computer program is run by an electronic device, the electronic device is enabled to implement the data reading method provided in the foregoing embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

In embodiments provided in this application, division into frameworks or modules is merely logical function division and may be other division during actual implementation. For example, a plurality of frameworks or modules may be combined or integrated into another system, or some features may be ignored or not performed.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

Reference to "one embodiment" or "some embodiments" described in this specification of this application means that one or more embodiments of this application include a specific feature, structure, or feature described with reference to the embodiment. Therefore, statements such as "in one embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application, and these modifications and replacements shall fall within the protection scope of this application.

## Claims

1. A data reading method, applied to a client, wherein the client reads data from a KV database through N KV database connections established between the client and a server, N≥1, and the method comprises:
receiving a first operation, wherein the first operation indicates the client to read target data from the KV database;
cyclically performing the following steps S1 to S3 based on the first operation:
S1: determine an idle connection from the N KV database connections;
S2: send a data reading request to the server through the idle connection, wherein the data reading request comprises a first command, a data identifier of the target data, a first reading cursor, and a reading step, and the first command indicates the server to read, from the KV database based on the data identifier, the reading cursor, and the reading step, a data segment corresponding to the data identifier; and
S3: receive a reading result returned by the server, wherein the reading result comprises a data segment corresponding to the target data, a second reading cursor of the target data in a next cycle, and indication information indicating whether reading of all the target data is completed; and
when a first preset condition is satisfied, stopping the cycle, and concatenating all read data segments in a reading sequence, to obtain the target data, wherein
a reading step in a k^{th} cycle is determined by the client based on a reading result received in a (k-1)^{th} cycle, and in the k^{th} cycle, the first reading cursor is updated to the second reading cursor, wherein k≥2.

2. The method according to claim 1, wherein the reading result further comprises a second version number, of the target data, that is recorded in the KV database.

3. The method according to claim 2, wherein the data reading request comprises a first version number, and the method further comprises:
in the k^{th} cycle, before sending the data reading request to the server through the idle connection, updating the first version number to the second version number.

4. The method according to claim 2 or 3, wherein the method further comprises:
determining a third version number, wherein the third version number is the second version number, of the target data, that is recorded in the KV database and that is comprised in the reading result in the (k-1)^{th} cycle.

5. The method according to claim 4, wherein the first preset condition comprises:
the second version number is consistent with the third version number, first indication information sent by the server is received, and the first indication information indicates that all the target data has been read.

6. The method according to claim 3 or 4, wherein the method further comprises:
when a second preset condition is satisfied, stopping the cycle, and deleting all the read data segments.

7. The method according to claim 6, wherein the second preset condition comprises:
the second version number is inconsistent with the third version number; or
the reading result comprises error information, the error information is generated by the server in the k^{th} cycle when the server determines that a version number in the received data reading request is inconsistent with a version number recorded in the KV database, and the error information indicates that the target data has changed.

8. The method according to any one of claims 1 to 7, wherein a process of determining the reading step in the k^{th} cycle comprises:
determining based on response duration of the reading result received in the (k-1)^{th} cycle; or
determining based on a quantity of times the reading result is received.

9. The method according to any one of claims 1 to 8, wherein the reading step is less than or equal to a first threshold.

10. A data reading method, applied to a server on which a KV database is deployed, wherein the method comprises:
receiving a data reading request sent by a client, wherein the data reading request comprises a first command, a data identifier of target data, a reading cursor, and a reading step, and the first command indicates the server to read, from the KV database based on the data identifier, the reading cursor, and the reading step, a data segment corresponding to the data identifier;
executing the first command based on the data reading request to obtain the data segment corresponding to the data identifier; and
when a third preset condition is satisfied, sending a reading result to the client, wherein the reading result comprises a data segment corresponding to the target data.

11. The method according to claim 10, wherein the data reading request further comprises a version number of the target data.

12. The method according to claim 11, wherein the third preset condition comprises:
the version number is 0; or
the version number is not 0, and the version number is consistent with a version number, of the target data, that is recorded in the KV database.

13. The method according to claim 11 or 12, wherein the method further comprises:
when the third preset condition is not satisfied, generating error information, wherein the error information indicates that the target data has changed; and
sending the error information to the client.

14. The method according to any one of claims 10 to 13, wherein executing the first command based on the data reading request to obtain the data segment corresponding to the data identifier comprises:
when the reading step is 0, executing the first command based on the data reading request, to obtain, by using a preset reading step, the data segment corresponding to the data identifier; or
when the reading step is not 0, executing the first command based on the data reading request, to obtain, by using the reading step, the data segment corresponding to the data identifier.

15. A client, wherein the client reads data from a KV database through N KV database connections established between the client and a server, N≥1, and the client comprises:
a receiving module, configured to receive a first operation, wherein the first operation indicates the client to read target data from the KV database;
an operation module, configured to cyclically perform the following steps S1 to S3 based on the first operation:
S1: determine an idle connection from the N KV database connections;
S2: send a data reading request to the server through the idle connection, wherein the data reading request comprises a first command, a data identifier of the target data, a first reading cursor, and a reading step, and the first command indicates the server to read, from the KV database based on the data identifier, the reading cursor, and the reading step, a data segment corresponding to the data identifier; and
S3: receive a reading result returned by the server, wherein the reading result comprises a data segment corresponding to the target data, a second reading cursor of the target data in a next cycle, and indication information indicating whether reading of all the target data is completed; and
a processing module, configured to: when a first preset condition is satisfied, stop the cycle, and concatenate all read data segments in a reading sequence, to obtain the target data, wherein
a reading step in a k^{th} cycle is determined by the client based on a reading result received in a (k-1)^{th} cycle, and in the k^{th} cycle, the first reading cursor is updated to the second reading cursor, wherein k≥2.

16. A server, wherein a KV database is deployed on the server, and the server comprises:
a receiving module, configured to receive a data reading request sent by a client, wherein the data reading request comprises a first command, a data identifier of the target data, a reading cursor, and a reading step, and the first command indicates the server to read, from the KV database based on the data identifier, the reading cursor, and the reading step, a data segment corresponding to the data identifier;
an execution module, configured to execute the first command based on the data reading request to obtain the data segment corresponding to the data identifier; and
a sending module, configured to send a reading result to the client.

17. A storage system, comprising the client according to claim 15 and the server according to claim 16.
